(19) Europäisches Patentamt

European Patent Office

Office européen des brevets

(11) **EP 4 678 320 A1**

(12) **EUROPEAN PATENT APPLICATION**

(43) Date of publication:
14.01.2026 Bulletin 2026/03

(21) Application number: 24188009.5

(22) Date of filing: **11.07.2024**

(51) International Patent Classification (IPC):
***B23H 1/02*** *(2006.01)* ***B23H 9/00*** *(2006.01)*

(52) Cooperative Patent Classification (CPC):
**B23H 9/006; B23H 1/022; B23H 9/00; B29C 45/37**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Agie Charmilles SA**
**6616 Losone (CH)**

(72) Inventor: **Bonini, Stefano**
**6614 Brissago (CH)**

(74) Representative: **Arend, Christa**
**United Machining Solutions Management AG**
**Wankdorfallee 5**
**3014 Bern (CH)**

(54) **METHOD AND APPARATUS FOR MACHINING A MULTIPLE MATERIAL WORKPIECE BY ELECTRICAL DISCHARGE MACHINING**

(57) The present invention is directed to a method for machining a multiple material workpiece by electrical discharge machining, the workpiece including at least two distinct phases. The machining process is conducted by applying discrete pulses to a gap between an electrode and the multiple material workpiece. An ignition voltage is applied to the gap to provoke a dielectric breakdown and a discharge current pulse is then applied to cause a material removal or material remelting. At least two distinct phases of the multiple material workpiece are machined in the same machining operation, and that the distinct phase of the multiple material workpiece at which a present discharge occurs is identified in real time based on a monitored process signal that settles with or after the dielectric breakdown. At least one pulse parameter setting of the present discharge current pulse is adapted based on the identified distinct phase of the multiple material workpiece.

Figure 1b

EP 4 678 320 A1

**Description**

**FIELD OF THE INVENTION**

The present invention discloses a method for the electrical discharge machining of a workpiece that consists of two or more materials. More specifically the invention is directed to a phase adaptive technology which discriminates the material or phase of a multiple material workpiece by means of real time process signal analysis.

**BACKGROUND OF INVENTION**

Electrical discharge machining (EDM) is suitable for machining of electrically conductive materials regardless of their strength and hardness. The removal of material occurs by successive sparks, separate in space and time. In die-sinking EDM the electrode feeds into the workpiece removing material by spark erosion until its geometry is precisely mirrored in the part. Die-sinking EDM is preferable for the machining of intricate geometries, minute features, cavities having high aspect ratios such as in the case of ribs. It is widely used in the manufacture of injection molding tools, forging dies, prototypes or components for turbines, electronic components and ICT, and medical applications. The most typical application of die-sinking is in the production of complex molding tools.

The manufacture of injection molding tools can be affected by various problems, which can impact the quality and efficiency of the production process of the final product. The design of the molding tools, the molding tool material, the molding parameters, and molding material are equally important. The molding tool material selected can impact the tool's durability, heat transfer properties, resistance to corrosive resins, and ability to withstand high clamping pressures.

Common molding tool materials include various steel grades including soft steel, semi-hardened and hardened steel, aluminium alloys and copper alloys. Each material has its advantages and its limitations. Aluminium and copper have the advantage of a high thermal conductivity, ease of machining, etc., however they have limited resistance against abrasion and thermal fatigue resistance. Soft- and semi-hardened steel materials offer a balance of durability and machinability, making them suitable for a wide range of applications. Hardened steel is commonly used for high production quantity tooling due to its thermal fatigue resistance and longer tooling life. More recently the development of new aluminium alloys has reduced the gap with steels in terms of specific properties, including durability.

Moreover, proportion of recycled plastic in plastic injection molding is constantly increasing. The recycled plastic granules are sometimes mixed with virgin granules but the presence of impurities in recycled granules cannot be completely avoided. They can alter the physical and chemical properties of the final plastic product. Impurities can also include dust, contamination, and other non-polymeric substances such as sand, metals, and glass which can lead to an early degradation of the molding tool, e.g., by abrasion. In conclusion, the desired type of plastic and the production volume is crucial for the molding tool material selection.

In further, injection molding tools may be subject to uneven wear. The molding tool material contributes to determine the cost of the molding tool and lastly the manufacturing cost of the final plastic product.

To optimize the injection molding process in terms of cost, injection cycle time, durability and/or quality, the use of injection molding tools constituted by two or more different materials has been considered. For example, the molding tool may have an aluminum alloy part and a steel alloy part. In this way, under favorable circumstances, the durability of a particular mold can be extended and cycle time reduced. The basic molding tool body can be realized by joining the solid parts of different materials in a traditional way, e.g., by screwing, interference fit, weld coating, electrocoating, etc. The molding tool is then machined in the assembled state.

The problems of bi-material processing by EDM, and an approach for solution are disclosed in the Entegris magazine article by Sanders and Fothergill. 'How to EDM steel and copper alloy simultaneously - A strategy for machining details when the part geometry falls across multiple workpiece materials'. Moldmaking Technology, November 2019. The approach proposed by the authors is to find a compromise machining parameters set, which can be used with both phases. Further information hereto is disclosed in Ablyaz, et al. 'Study of the EDM Process of Bimetallic Materials Using a Composite Electrode Tool'. Materials 15, no. 3, 2022. https://doi.org/10.3390/ma 15030750.

A different field, namely the additive technologies, which make it possible to build components layer wise or voxel wise from the desired material. For instance, metal powder bed fusion (MPBF) is used to build cohesive solid bodies in which substance jointing is achieved by controlled high-energy radiation. A branch of the additive technology deals with the generation of multiple material parts, such as for example a part including regions made of steel and other regions made of tungsten. In this way it is possible to take advantage of the peculiarities of certain phases in particular for use in functional regions and for critical applications, and to take advantage of the ability to directly integrate cooling circuits by means of the additive manufacturing process.

Also, composite materials such as metal matrix composites (MMC) or ceramic matrix composites (CMC) are used in many fields, and their use and application cases are steadily growing because of potential advantages, e.g. high strength, lightweight, corrosion resistance, durability, etc.. These examples illustrate the potential of multiple material parts, especially for highly stressed parts or part with different requirements. The machining of such multiple material parts is not trivial, because the machining parameters of a first region may not be ideal for another region of that part. However, the quality of parts should not be lowered by manufacturing problems.

In EDM the processing parameters are selected in consideration of the desired machining results e.g., in terms of shape accuracy, surface roughness. Several basic processing parameter sets are stored in a technology parameter database of the EDM machine. The workpiece material and electrode material are input values used to determine the processing parameters required for the execution of the job. The machining of multiple material workpieces may generate uneven removal, uneven electrode wear and/or uneven surface roughness. One may use conservative machining parameters, but these problems may persist in case of different material properties. This is since different materials can yield varying results, even when subjected to identical discharges. However, the cavity of the mold should be uniformly smooth, without discontinuities.

From CH662074A5 it is known to measure the spark voltage in a measuring window whose position in time is controlled by the detection of the breakdown, and that the spark is interrupted if the voltage measured in the measuring window is between a first level above the short-circuit voltage and a second level below the spark machining voltage. In other words, the aim is to maintain the normal discharges, interrupt the pulses whose discharge voltage is between the said first and second level, but also maintain the pulses whose voltage is below of the short circuit level, where the pulse current serves to suppress the metallic bridge.

From EP2610027B1 it is known that there exists a relation between the geometric configuration of the location of a discharge (corner, edge, flat) and the discharge voltage level, and that a type of dimension of an instantaneous eroding surface area of the tool electrode on which the current electric discharge is generated can be discriminated, and that a discharge current pulse can be adapted in real time to optimize the process based on the geometric location. This document also discloses measurement of discharge voltage and real time adaptation of the current pulse bases on the type of dimension of an instantaneous eroding surface area, however phase adaptive multi-material workpiece processing is not addressed.

CN106270839A discloses a multi-material electric spark processing method to solve a problem of uneven electrode tool wear in complex cavities machining by die sinking EDM. A multi-material EDM electrode includes an electrode base bearing at its bottom a plurality of partial electrodes of different materials, side by side. The material of the partial electrodes is selected on the base of the wear expected at different regions of the cavity, with improved wear resistance for the regions at which the wear problem is more pronounced. This method does not address the topic of multi-material workpiece processing. In addition, the authors do not suggest a particular multi-material process control of a current EDM process as a function of the electrode tool material / workpiece material pairing at which a discharge occurs.

For the machining of a multiple material workpiece, one may also consider using CAD-CAM data, e.g. to define certain process parameters as a function of the depth and/or position in the cavity. One may also consider using a distinct electrode and electrode material for each phase of the multiple material workpiece, however this approach is complicated and inefficient.

## SUMMARY OF THE INVENTION

It is an objective of this invention to provide a method for machining a multiple material workpiece by electrical discharge machining in which each phase of the machined workpiece surface presents the desired characteristics. In particular, it is an objective to achieve a uniform surface across the different phases of the multiple material workpiece.

According to the present invention, these objectives are achieved through the features of independent claims. In addition, further advantageous embodiments follow from the dependent claims and the description.

Certain process signals, for example the discharge voltage depends on the combination of electrode material and workpiece material used. Now it has been found that such process signal can be determined in real time and used fruitfully to discriminate at which phase of a multiple material workpiece a present discharge is occurring. Further it has been found that one can adapt the pulse parameter settings as required for each of the phases of the multiple material workpiece.

The present invention aims to improve the machining of multiple material workpieces by EDM. According to a first aspect of the invention, the EDM processing of a multiple material workpiece is conducted by adapting at least one pulse parameter setting of a present discharge to match with the workpiece material on which a present discharge is taking place.

The present invention is directed to a method for the machining of a multiple material workpiece by electrical discharge machining. The multiple material workpiece includes at least two distinct phases. The EDM process is conducted by applying discrete pulses to a gap between an electrode and the multiple material workpiece, whereas an ignition voltage is applied to the gap to provoke a breakdown in the dielectric and a discharge current pulse is then applied to cause the material removal. The at least two distinct phases of the multiple material workpiece are machined in the same machining operation.

The distinct phase of the multiple material workpiece at which the present discharge occurs is identified in real time based on a monitored process signal that settles in the gap with or after the dielectric breakdown. At least one pulse parameter setting of the present discharge current pulse is adapted based on the identified distinct phase of the multiple material workpiece.

In detail, a multiple material workpiece to be processed according to the invention includes two or more phases. According to the invention, the term "phase" defines a substantially one-phase system, a distinct chemical element or an alloy having distinct material properties. This includes atomic properties, physical and chemical properties, e.g., electrical resistivity and conductivity, hardness, resilience, thermal conductivity, melting point, corrosion resistance, etc. In particular, the thermo-physical properties are relevant for the erodibility and for the selection of optimal pulse parameters to be produced by the generator. Preferably the phases are pure metals or metal alloys. However, the phases can include other than metals as long as these phases can be eroded, also using an artifice such as generating a carbonaceous layer by thermal decomposition of the dielectric.

During the EDM operation a discharge can occur at any of the phases of the multiple material workpiece. The discharges occur substantially in sequence, unpredictably. This means that one or more discharges can occur at a first phase, then one or more discharges can occur at a second phase, and so on. For example, if both phases are participating to the present gap, then discharges may occur between the tool electrode and each one of the phases. On the other hand, discharges may occur only at one phase at the time, if a first region to be eroded or a first section of the path is constituted by a first phase only, and a second region is constituted solely by a second phase.

According to the invention the term "machining operation" refers to the execution of an individual EDM operation, that is a single die-sinking machining along of the programmed path. The machining operation can include a simple electrode for the machining of a single cavity or multiple cavities which are machined in the same machining operation using a combination electrode with a plurality of distinct engaging sections.

The electrode tool material is substantially uniform. Most commonly the electrode is made of copper, graphite, copper infiltrated graphite, tungsten or copper infiltrated tungsten. However, other electrode materials can be used depending on the workpiece material and the application. The selection of the electrode material for the machining of a multiple material workpiece is more complicated. The EDM machine control unit or a CAM system may provide recommendation about the most suitable electrode tool material for a given multi material workpiece to be machined by EDM.

An advantage of the invention is that the machining parameters can be adapted in consideration of the distinct workpiece phase which is currently hit by the spark based on certain process signals. The process itself provides these signals in real time, and the discharge pulse characteristics can be adapted during the same discharge pulse. This means that the EDM method according to the invention can improve the machining of a multi-material workpiece. Moreover, the method according to the invention can deal with distributed phases such as layered- or oriented phases, but also randomly distributed phases of the workpiece, for example metal matrix composites.

Discrete pulses are separated by pulse pauses $t_o$. An electric field is formed by application of an ignition voltage which is higher than the breakdown voltage. At this stage the gap impedance is determined by the gap width, and the gap condition depends mainly on the dielectric fluid, the gap contamination, and the bubbles. The gap is ionized by the high-speed electron emission at the electrode and collision of electrons in the gap; a channel of plasma is formed. The dielectric breakdown occurs at a time after applying the ignition voltage which is called ignition delay time $t_d$. After breakdown the gap impedance and thus also certain process signals such as the gap voltage are substantially determined by the specific pairing of electrode tool material and workpiece material at which the discharge is taking place.

The invention takes advantage of the different characteristic, material dependent process signals, for instance characteristic discharge voltages ($U_{e1}$, $U_{e2}$) which settle at each discharge and applies dedicated predefined pulse parameters or a dedicated predefined set of machining parameters for the workpiece phase participating to a present discharge.

In some embodiments, the monitored process signal which is indicative of the distinct phase of the multiple material workpiece at which a present discharge occurs is one or more of the following: a discharge voltage $U_e$, a fall time $t_f$, and a discharge plasma oscillation frequency $f_{Pe}$.

With breakdown, the gap voltage drops from the ignition voltage $U_o$ to the discharge voltage $U_e$ which is determined by the impedance of the gap at the present discharge point. As illustrated above the impedance and thus the discharge voltage $U_e$ is determined by the phase at which the present discharge is taking place. In a multiple material workpiece having two phases the difference of the respective average discharge voltage between the electrode-workpiece material pairings can be several Volts. This means that, if there is a sizeable difference of the average discharge voltages, present electrode-workpiece material pairing at which the discharge is taking place can be identified by means of the presently measured discharge voltage $U_e$.

Normally the gap voltage $U_{Gap}$ is continuously measured to monitor each phase of the process. The breakdown can be detected by means of a threshold voltage $L_1$ below the ignition voltage. It can be used to start the discharge voltage measurement period. The measurement period of e.g. 500 ns shortly after the breakdown is small compared with the discharge time $t_e$. Preferably the measurement period $T_m$ begins after a well-defined timeout or waiting time $T_w$ after the detection of breakdown. The waiting time $T_w$ is set as needed; explanations hereto are given further down. This acquisition method for the discharge voltage is per se known from the previously cited CH662074A5 and EP2610027B1 the disclosure of which is hereby incorporated.

In a preferred variant, the discharge voltage $U_e$ is measured within a measurement period $T_m$, preferably after a waiting time $T_w$ after the detection of the dielectric breakdown.

Another process signal which can be used as a marker for the distinct phase of the multiple material workpiece at which a present discharge occurs is the fall time $t_f$. The fall time is determined in known manner, for example by measuring the time that passes between the crossing of two predefined threshold voltages $L_1$, $L_2$, when the gap voltage falls from ignition voltage to discharge voltage. The advantage of using the fall time $t_f$ is that it can be measured ahead of the actual discharge current pulse, eventually setting a suitable discharge current pulse from the very begin.

A further process signal which can be used as a marker for the material is the highfrequency component of the discharge voltage, which reflects a discharge plasma oscillation frequency $f_{Pe}$. However, the gap voltage $U_{Gap}$ is routinely measured in the EDM process and thus preferred.

In particular, the measured discharge voltage $U_e$ of the present discharge is compared with one or more voltage thresholds $L_{phase}$, and the present discharge is assigned to one of the at least two distinct phases of the multiple material workpiece based on the comparison of the measured discharge voltage with the one or more voltage thresholds.

The one or more voltage thresholds can be used for the classification of the present discharge based on the discharge voltage, or, to define discharge voltage ranges and to assign the discharge voltage of the present discharge occurring at a specific electrode-workpiece material pairing.

For example, it is possible to determine if a discharge is to be assigned to the first- or the second phase of a bi-material workpiece by setting a discharge voltage threshold $L_{phase}$ between a first discharge voltage and a second discharge voltage, with

- a first discharge voltage which settles when the discharge is between the electrode and a first phase of the bi-material workpiece, and,

- a second discharge voltage which settles when the discharge is between the electrode and a second phase of the bi-material workpiece.

However, the discharge voltages must be known to set a discharge voltage threshold $L_{phase}$ appropriately. For this reason, the characteristic discharge voltage for each specific combination of electrode and workpiece material must be identified.

In one variant, a characteristic discharge voltage for a specific combination of an electrode material and a phase of the workpiece material is determined by measurement.

Alternatively, the characteristic discharge voltage for a specific combination of an electrode material and a phase of the workpiece material is estimated using a model.

As discussed above the discharge voltage which settles after the breakdown is a characteristic value which in essence depends on the pairing of electrode material and workpiece material, and other factors such as the discharge current. Typically, the characteristic discharge voltages are determined by conducting laboratory experiments for a limited number of specific combinations of electrode and workpiece material, and for a limited number of different reproducible conditions, for instance different discharge currents $I_e$. These values are typically collected by the EDM machine manufacturer in a technology parameter database.

To a certain extent, the determined characteristic voltage may be applied to several materials/phases which are "similar" with the one used in the laboratory experiments in terms of e.g. electron mobility. Typically, the characteristic discharge voltage is expressed as a voltage value or as a voltage range. Thus, a characteristic discharge voltage or voltage range may be applied to an entire family of combinations of similar electrode material and/or similar workpiece material.

The characteristic values of discharge voltage of specific combinations of electrode and workpiece material are henceforth defined as "characteristic discharge voltage". A characteristic discharge voltage for a particular electrode-workpiece material combination can be retrieved from a technology parameter database or a formula. These values are stored e.g. in the control unit of the EDM machine, in a local or remote server, in a cloud, or otherwise accessed via a network or internet.

Sometimes there is only little or no information at all about the workpiece material to be machined or its constituting phases, for instance for secrecy reasons, and thus the characteristic discharge voltages cannot be determined using e.g. tables or databases.

However, one may conduct a machining test to determine the characteristic discharge voltages between the electrode and each of the constituting phases of the unknown material. If an appreciable difference of the characteristic discharge voltages exists, one may conduct further experiments to determine the value of each characteristic discharge voltage, by intentionally machining only one of the phases of the multiple material workpiece, possibly using a fixed electrode surface area and fixed discharge current. Suitable processing parameters can then be determined for each of the phases involved. The invention can therefore be used even if the different phases of the workpiece involved are not previously known.

For instance, a manual method to determine the characteristic discharge voltage and to find a suitable threshold voltage $L_{phase}$ includes utilizing an oscilloscope, for the measure the waveforms of the gap voltage while machining. The oscilloscope should preferably feature the persistence mode to represent the cumulative pattern of discharge voltages of the participating workpiece phases. This makes it very easy to identify each characteristic discharge voltage pattern. Moreover, a suitable threshold voltage fitting in-between said characteristic discharge voltages to discriminate the phase which is hit by a present spark can be easily determined.

Alternatively, the characteristic discharge voltage is determined by on-machine measurement, using the measuring means already available on state-of-the-art EDM machines.

In one variant, a specific combination of an electrode material and a phase of the workpiece material is machined by EDM and the discharge voltages of a plurality of successive discharge pulses are determined by measurement, whereas the discharge voltage is measured after a waiting period $T_w$ after the detection of breakdown, and the characteristic discharge voltage is determined by computing the average value of the measured discharge voltages.

This procedure can also be used to determine the characteristic discharge voltages of each of the electrode-workpiece material pairings of a multiple material workpiece processing.

According to an embodiment, the discharge voltages of a plurality of successive discharge pulses that settles between an electrode material and a phase of the multiple material workpiece are measured in process. The distribution frequency of discharge voltage measurements is analysed to determine accumulation points of the discharge voltage distribution, and an average discharge voltage is computed for each accumulation point. Said determined average discharge voltages at accumulation points designate the characteristic discharge voltage of each combination of an electrode material and a phase of the machined multiple material workpiece.

For each combination of the electrode material and a phase of the multiple material workpiece, the discharge voltage of a plurality of pulses is measured. A cluster of discharge voltages for the same combination can be formed. The goal is to determine the voltage of clusters which are then associated to respective phases of the material. Each accumulation point is defined as a cluster of discharge voltages. For example, if two different materials are used, the measured discharge voltages show two clusters of discharge voltage values. For each cluster an average discharge voltage is determined. The threshold value is set as the middle of two adjacent average discharge voltage values. If one discharge voltage is higher than threshold value, then it is one material. If the discharge voltage is lower than the threshold value, then it is another material.

Typically, the difference between the average discharge voltages must be a few volts to allow identification of the material. To ensure better distinction, the threshold can be brought closer to the average discharge voltage of the material which has a lower dispersion of the average discharge voltage.

One aspect of the invention is the automated determination of the phase of the material. Not only the discharge voltage measurement can be conducted automatically but also the determination of the characteristic discharge voltage of each combination of the electrode material and the determination of the phase of the material can be automatically performed.

Under certain circumstances in absence of a value from the technology parameter database the characteristic discharge voltage can be estimated using a model, e.g. using the characteristic discharge voltage of materials knowingly having similar values. In this way one may avoid the execution of experiments.

Once the characteristic discharge voltages for each distinct phase of the multiple material workpiece are known a threshold voltage can be determined.

According to an embodiment, a threshold voltage $L_{phase}$ which is used to determine the distinct phase of the multiple material workpiece for the present discharge is set between the characteristic discharge voltage of each material combination consisting of the electrode material and one distinct phase of the multiple material workpiece, whereas these characteristic discharge voltages are retrieved from a technology parameter database or are determined in-process.

In other words, a threshold voltage $L_{phase}$ is either set before the machining start to identify the present phase based on known characteristic discharge voltages, or is identified in the course of the machining process. A threshold voltage $L_{phase}$ can be identified automatically in-process and automatically adjusted in the course of process to reflect the progress of the machining.

For example, EDM machining of a bi-material workpiece is conducted in the conventional way. After a stabilization phase, the discharge voltage of a number of discharge pulses is measured in a sampling cycle. The characteristic discharge voltages of each of the two electrode-workpiece material combinations are automatically determined by evaluating a distribution of the measured discharge voltages.

This is achieved for instance by statistical analysis of cumulative frequency of discharge voltage classes and determination of the classes cumulation points which can be considered as characteristic discharge voltages. Lastly the threshold voltage $L_{phase}$ is set using the mean value of the previously determined characteristic discharge voltages.

Preferably only "normal" discharges (or normal pulses) are considered for the determination of the characteristic discharge voltage.

A single discharge voltage threshold $L_{phase}$ may suffice to assign a present discharge to a specific phase of a bi-material workpiece. For example, a bi-material moulding tool comprising an aluminium base with steel inserts is processed by die-sinking using graphite electrodes. The cavity to be formed thus comprises two phases, an aluminium phase, and a steel phase. The characteristic discharge voltage between the graphite electrode and the aluminium phase settles at 21V whereas the characteristic discharge voltage between the graphite electrode and the steel phase settles at 24V. A discharge voltage threshold is set between the characteristic discharge voltages, e.g. at 22.5V.

By setting several discharge voltage thresholds it is possible to discriminate more than two phases of the workpiece, or, to determine more precisely if a discharge voltage is in a certain discharge voltage range, and this may help to improve the determination of the specific phase of the workpiece which is hit by a present discharge.

In some embodiments, the present machining pulse is adapted in real time based on the identified distinct phase of the multiple material workpiece at which a present discharge occurs by adjusting at least one pulse parameter.

As illustrated earlier, the distinct phase of the multiple material workpiece at which a present discharge occurs can be identified in real time by comparing the discharge voltage of the present pulse with a discharge voltage threshold. Now, the machining pulse is adapted and optimized for the identified phase at which the present discharge occurs. The discharge pulse parameter, i.e. intensity, duration, shape, etc. can be adapted during the same discharge pulse. By this the machining result can be improved.

The most relevant process parameters controlled in real time are one or more of the following: the discharge current $I_e$, the discharge duration (or pulse-on-time) $t_e$, the pause before the next ignition voltage application (or pulse-off-time) $t_o$, and the pulse shape. Pulse power and energy are determined by pulse intensity, duration, and shape, while the deionization depends on the duty factor $\tau$, means the ratio between the pulse-on-time $t_e$ and the overall pulse cycle time $t_p = t_d + t_e + t_o$.

Preferably, the at least one adapted pulse parameter includes one or more of: a discharge duration $t_e$, a discharge current $I_e$, a current pulse shape, and a pulse pause $t_o$.

The discharge duration $t_e$, the discharge current $I_e$, and the discharge current pulse shape are discharge current pulse parameters that can be adapted or replaced in real time to optimize the present discharge, for instance by applying a predefined set of parameters based on the comparison of the discharge voltage measurement with the threshold voltage. The pulse pause $t_o$ is a further parameter which can be adapted based on the present distinct phase to positively control the process.

For instance, the process is conducted using a long discharge duration $t_{e1}$ which fits for a first phase. The measurement of the discharge voltage reveals that the actual discharge is at the other phase, which requires a comparably short discharge duration $t_{e2}$, thus the discharge current is stopped at $t_{e2}$. This means that the long discharge duration $t_{e1}$ is maintained where the first phase is detected, and the discharge duration is shortened to a duration $t_{e2}$ for machining the second phase.

The objectives in the processing of a multiple material workpiece can be e.g. an optimal removal rate or surface uniformity. To achieve a uniform surface across the phases of the workpiece, crater size must be similar, which means that the pulse energy must be adjusted for the present phase. But also, the electrode wear may be different in processing of multiple material workpiece, so that the pulse shape and/or another of discharge duration $t_e$, a discharge current $I_e$, and a pulse pause $t_o$ may need to be adjusted.

Actually, one can use the invention to nearly suppress the machining of a phase of a multiple material workpiece by stopping the discharge current immediately after the detection of the discharges occurring at that phase.

However, the detection of the phase of a multiple material workpiece can also be used to trigger other adjustments, other than the above real time parameters. For example, a multiple material workpiece with stacked phases may include a first phase in the first layer, and a second phase in the second layer of the cavity of the workpiece. At the transition from the first phase to the second phase of the workpiece the discharge voltage may change due to the different characteristic discharge voltage. One may thus derive that the first part is completed and, use the measured discharge voltage to trigger an adjustment of a process parameter, such as a flushing parameter, or any other action, such as to replace an electrode or invert polarity.

According to an embodiment, the present machining pulse is adapted in real time based on the identified distinct phase of the multiple material workpiece at which a present discharge occurs by applying one of a plurality of predefined set of machining parameters.

A "set of parameters" is immediately applied to the present pulse after the identification of the combination including the electrode material and a distinct phase of the multiple material workpiece. The "set of parameters" comprises a plurality of parameters which are adapted for a particular combination of electrode material and phase of the multiple material workpiece and based on other criteria such as the present machining step. In particular the "set of parameters" may be selected based on the progression of the machining operation, e.g. based on the current machining step.

In other words, the phase of the workpiece at which the present discharge strikes is identified after the breakdown, and the adapted set of parameters which fits for the machining of the present phase is applied in real time. In this way, each phase is processed with dedicated pulses, which take the material characteristics into account.

For example, the dielectric breakdown can be detected in known way, for instance by detecting the gap voltage falling below of a predefined breakdown detection voltage threshold. A discharge voltage measurement $T_m$ starts, preferably after a waiting time $T_w$ from the detection of the dielectric breakdown. The measured discharge voltage and the voltage thresholds are compared, and the set of parameters for the presently detected material combination including the distinct phase of the multiple material workpiece at which a present discharge occurs is applied immediately thereafter.

The waiting time, the measuring time and the time required to identify the material phase is negligible in comparison with the entire duration of the discharge, so that the present invention can be used in a wide range of applications, pulse durations.

Preferably, in addition to the adaptation of a pulse parameter or application of a set of machining parameters, the real time detection of the distinct phase of the multiple material workpiece at which a present discharge occurs can be used to control a threshold voltage level for arc-detection. This means that an arc-detection threshold level can be adapted during the present discharge according to the phase of the workpiece. Protection strategies can be adapted pulse-wise, for the detected phase. In this way some pulses having a comparably low discharge voltage are not needlessly suppressed, and other pulses having a comparably high discharge voltage can benefit of a suitably adapted arc-detection threshold level.

In an advantageous variant, a pilot pulse is applied immediately after the dielectric breakdown and the discharge voltage is measured at said pilot pulse, and the phase of the workpiece which is hit by the present discharge is determined based on the measured discharge voltage. The pilot pulse serves to determine the phase. Preferably, the pilot pulse has a short duration and moderate current amplitude which is lower than the current pulse. The pilot pulse is immediately followed by a main, more energetic discharge current pulse which serves mainly for the material removal. This main current pulse is formed by a distinct generator board, and the characteristics of the main current pulse are adjusted in real time based on the measured discharge voltage of the pilot pulse. Here, in addition to the previously mentioned parameters, discharge duration $t_e$, discharge current amplitude $I_e$, discharge current pulse shape and pulse pause $t_o$, the adaptation may include the electrode polarity. For instance, the generator includes a first generator board providing main pulses of positive polarity and a second generator board providing inverted polarity main pulses. Based on the measured discharge voltage of the pilot pulse the main current pulse is then immediately released by the first or the second generator board.

According to an embodiment, the control unit or CAM-system suggests the electrode material to be used based on the actual material combination of the multiple material workpiece. The user provides the information about the phases of the multiple material workpiece via user interface (HMI or CAM-System) and gets a proposal of an electrode material to be used for the given combination.

According to the present invention, a die-sinking machining apparatus for machining a multiple material workpiece including at least two distinct phases is provided. The apparatus comprises a generator control module configured to control a generator for applying discrete pulses to a gap between an electrode and the multiple material workpiece. An ignition voltage is applied to the gap to provoke a dielectric breakdown and a discharge current pulse is then applied to cause a material removal or material remelting. The apparatus further comprises a gap acquisition module configured to monitor a process signal that settles with or after the dielectric breakdown. The general control module is configured to identify in real time the distinct phase of the multiple material workpiece at which a present discharge occurs based on the monitored process signal. The generator control module is further configured to adapt at least one pulse parameter setting of the present discharge current pulse based on the identified distinct phase of the multiple material workpiece.

## BRIEF DESCRIPTION OF THE DRAWINGS

In the following, a more particular description of the present invention is further described. The embodiments are described and explained with details with reference to accompanying drawings in which:

Fig. 1a      illustrates an electrode creating a cavity in a single material workpiece;

Fig. 1b-1f      illustrate an electrode creating a cavity in a multiple material workpiece;

Fig. 2a-2b      illustrate graphs of the course of gap voltage of discharges in different materials;

Fig. 3a-3c      illustrate schematic plots of gap voltage, discharge current, and oscillator clock pulse;

Fig. 4      illustrates graphs of the relation between the gap voltage thresholds and discharge current $I_e$ for different electrode and workpiece material combinations;

Fig. 5a-5c       illustrate the course of gap voltage and adaptation of the discharge duration;

Fig. 6a-10b      illustrate a schematic plot of gap voltage and discharge current, with various adaptations of the discharge pulse; and

Fig. 11a-12b     illustrate a schematic plot of gap voltage and discharge current;

Fig. 13a, b      illustrates a possible defect in multiple material machining;

Fig. 14,15       illustrate a schematic plot of gap voltage; and

Fig. 16          illustrates a block diagram of an embodiment of a die-sinking electric discharge machine in accordance with the present invention.

## EXEMPLARY EMBODIMENTS

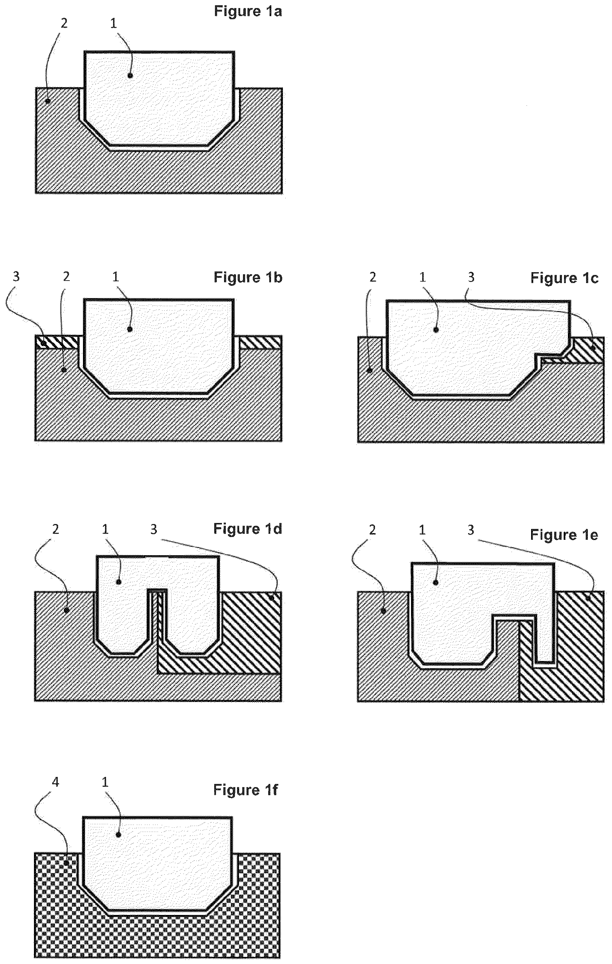

Figures 1a to 1f each of which represents an electrode 1 engaged in an electrical discharge machining by die-sinking to produce a cavity in a workpiece. Figure 1a illustrates a situation in which the electrode 1 encounters a homogeneous workpiece consisting of a single material 2. In contrast, all the figure 1b to 1e represent a multiple material workpiece consisting of two materials, 2 and 3. Figure 1f is a composite workpiece material 4.

Figure 1b shows a workpiece having a layered composition includes a base material 2 and a second material 3 lying on top. Figure 1c shows workpiece having a base material 2 and a second material 3 only in a small region of the workpiece, for instance where higher wear is expected, and reproduction accuracy of moulded products must be preserved. Material 3 may be a hard layer applied for instance by cladding or electroplating.

Figure 1d and 1e both show a multiple material workpiece which is processed using a composite electrode, means that the electrode has multiple different structures. Comparing the illustrations 1b, 1c, 1d and 1e, we can see that the conditions in the course of the die-sinking process are different, in the sense that in certain cases both materials are engaged at the same time whereas in other cases only one material is engaged.

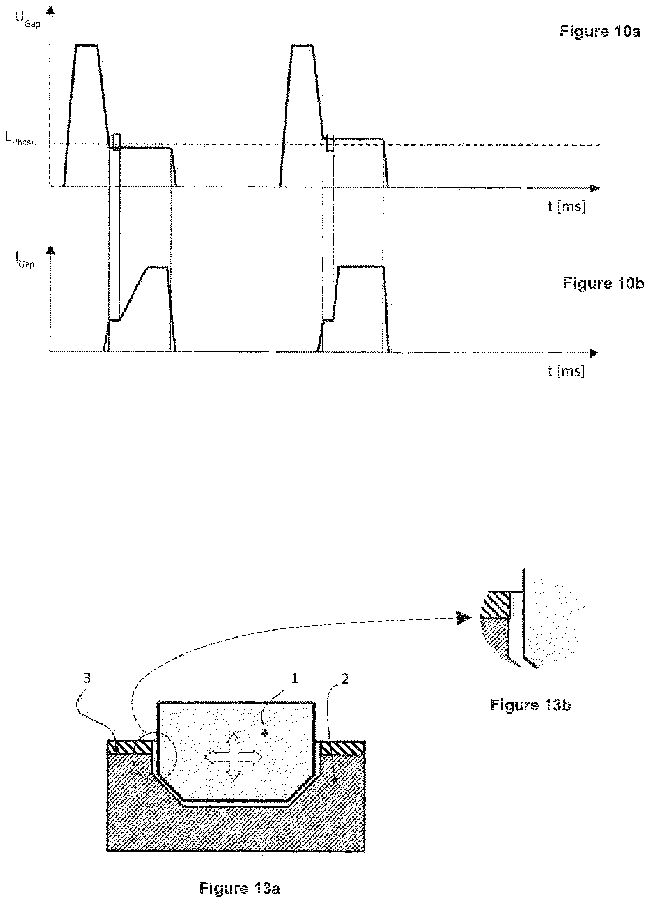

Figure 13a shows a multiple material workpiece including two materials, for instance the first phase 2 is an aluminium alloy and the second phase 3 is a steel layer and the workpiece is processed with an orbiting movement. Figure 13b illustrates a detailed view of the transition region of the first phase and the second phase in the vertical direction. It can be seen that a defect may occur using known methods. Using the same pulse energy indistinctly, the removal of the aluminium phase is higher so that a discontinuity in the vertical direction is formed at the transition, namely a tiny step is formed in the vertical direction. Moreover, the surface of the cavity is uneven because the craters formed at the first phase 2 are larger in size than the craters formed at the second phase 3. Thus, using the method of the present invention can reduce or even avoid such defect, since the phase of the workpiece can be detected and the machining parameters can be adjusted in accordance with the detected phase.

In the present invention, the phase of the workpiece is not just determined once during the machining. On the contrary, the determination is performed continuously, in real time. The discharge can occur at any position along the gap, because the EDM process is chaotic. The material of the workpiece at the position where the current discharge occurs can be immediately determined, and the pulse parameters can be adjusted for the specific identified material to provide optimal machining results.

One may determine geometric information about the distribution of the materials in the workpiece, for instance in a configuration according to figure 1b, indicating a transition point from one material 3 to another material 2 based on the position of the Z-axis, but usually it is not possible to record the transition of machining from one material to another material accurately, moreover this solution is unapt when both material are processed at the same time.

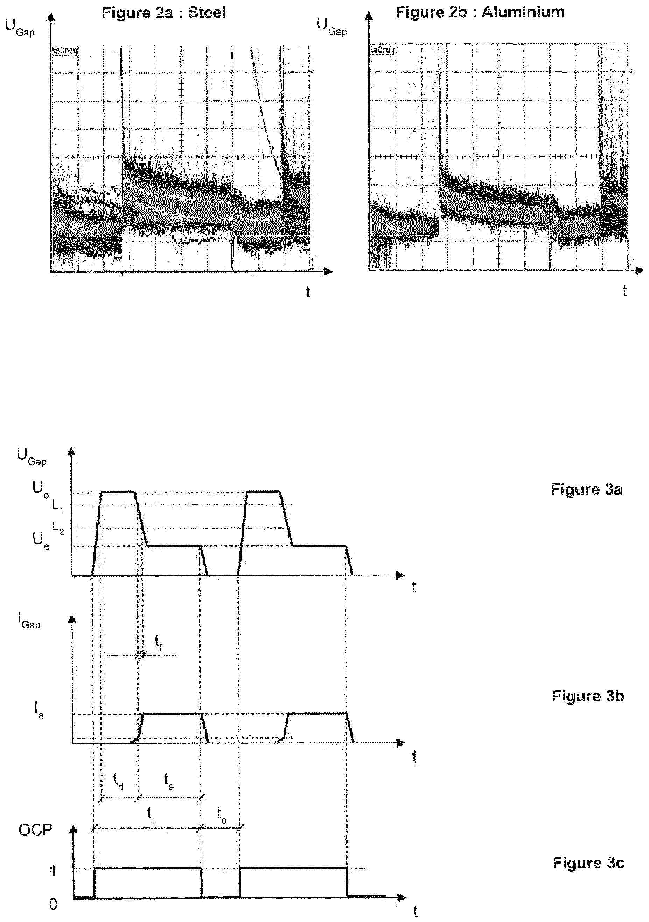

The invention discloses a method to identify the distinct phase of the multiple material workpiece at which the present discharge occurs, in real time. This is achieved by monitoring a process signal that settles in the gap with or after the dielectric breakdown. One very suitable process signal is the discharge voltage $U_e$, which depends on the pairing of workpiece and electrode material used in the EDM process. Another process signal which can be used is the fall time $t_f$. These parameters are shown in figure 3a, for example.

Referring to figures 3a and 3b there is illustrated the gap voltage and current profile of an ideal machining pulse as a function of time in a known die-sinking electrical discharge machine, with an anodic-poled machining electrode. Figure 3c depicts the oscillator clock signal OCP controlling the pulse duration $t_i$ of the machining pulses and the pulse pause $t_o$ between two pulses.

To initiate the discharge channel, an open voltage is applied to the gap between the tool electrode and the workpiece. The ignition occurs after an ignition delay time $t_d$. With the ignition, the gap voltage falls from the value of the open voltage $U_o$ with a variable slope, during a fall time $t_f$, to a discharge voltage $U_e$. It is possible that a small current $I_o$ flows

also during the fall time $t_f$, which is illustrated in the FIG figure 3b showing the current flowing across the gap.

The material removal occurs during the discharge time $t_e$, whereas the tool electrode wear occurs at the beginning of this time interval. During the ignition delay time $t_d$ and in the pause time $t_o$ no machining current flows and there is practically no material removal.

Figure 2a and 2b are oscilloscope measurements recorded in persistence mode to represent the cumulative pattern of the discharge voltage in time of the participating workpiece phases of discharges in different materials under similar conditions. Figure 2a shows the course of discharge voltage between a graphite electrode and a steel workpiece, and 2b shows a discharge voltage between a graphite electrode and an aluminium workpiece. The voltage scale is 10V/div, the time scale is 10us/div It can be seen that the average discharge voltage for the aluminium workpiece is lower than for the steel workpiece.

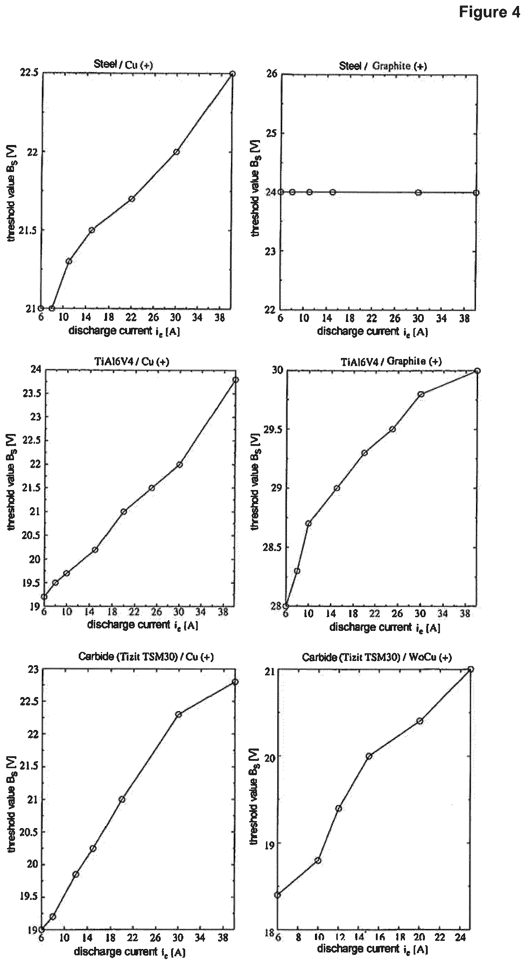

The gap voltage also depends on the discharge current $I_e$ which affects the size of the gap. The relation between the gap voltage thresholds and discharge current $I_e$ is illustrated in figure 4 for different electrode and workpiece material combinations and polarities. These graphs are an excerpt from: Behrens, et al. 'Threshold Technology and Its Application for Gap Status Detection'. Journal of Materials Processing Technology, 149, no. 1, pp. 310-315, https://doi.org/10.1016/j.jmatprotec.2003.10.041.

The graphs of figure 4 refer to the discharge voltage threshold, however this value is only slightly lower than the effective discharge voltage of a normal discharge.

Moreover, the average gap voltage depends on the eroding surface size and by other factors such as the shape of the electrode. The relation between the gap voltage and discharge eroding surface size is illustrated in Valentinčič et al. 'On-Line Selection of Rough Machining Parameters'. Journal of Materials Processing Technology, 149, no. 1, pp. 256-262, https://doi.org/10.1016/j.jmatprotec.2003.11.059.

To control the duration, intensity, and/or shape of the present discharge current pulse and/or the pause time following the present discharge, the discharge voltage is advantageously measured as early as possible.

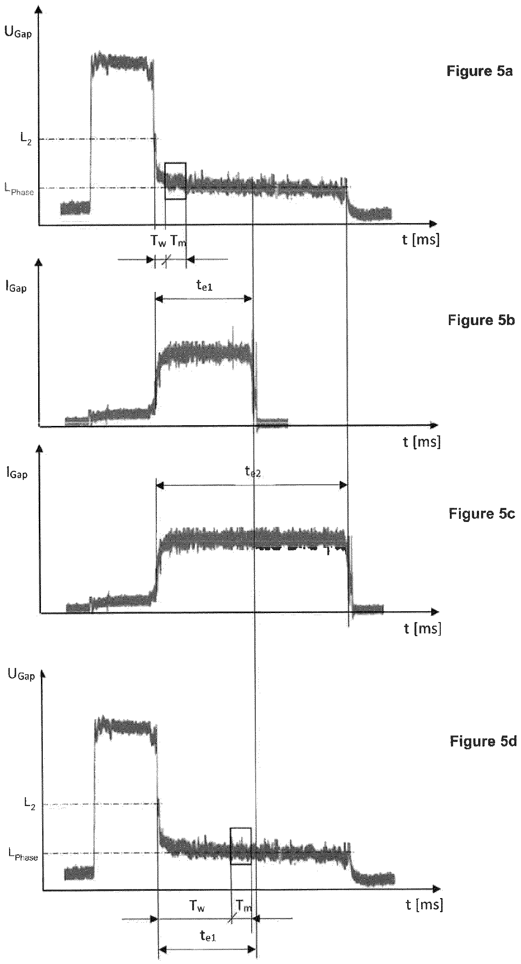

Figure 5a shows an exemplary course of the gap voltage and a measurement window for the acquisition of the discharge voltage. For instance, the breakdown is detected by a voltage threshold $L_2$. After a waiting time $T_w$ the discharge voltage is measured during a measurement time $T_m$. The comparison of the measured discharge voltage with a previously set phase discrimination voltage threshold $L_{phase}$ is used to adjust one of the parameters of the present current discharge pulse or the following pause time $t_o$. In the present example the adjusted parameter is the current discharge pulse duration $t_e$. Figure 5b and 5c are examples of a current discharge pulse duration adjustment based on the comparison of the measured discharge voltage with the threshold. If the measured discharge voltage $U_e$ is higher than the voltage threshold $L_{phase}$, a long current discharge pulse duration $t_{e2}$ is applied. If the measured discharge voltage $U_e$ is lower than the voltage threshold $L_{phase}$ the shorter current discharge pulse duration $t_{e1}$ is applied. In a simple embodiment, a default pulse duration $t_{e2}$ is applied, and the pulse duration is shortened to $t_{e1}$ only if the presently measured discharge voltage is lower than the voltage threshold $L_{phase}$.

Figure 5d shows the same course of the gap voltage of Figure 5a, however in this embodiment the measurement window is set at the end of the programmed current discharge pulse duration $t_{e1}$. In other words, the waiting time $T_w$ after the breakdown is only a little less than the pulse duration $t_{e1}$. In this way the measurement of the discharge voltage is more reliable, but still in time to determine the present phase and adjust the present current discharge pulse, e.g. by stopping the pulse at $t_{e1}$ or extending to $t_{e2}$.

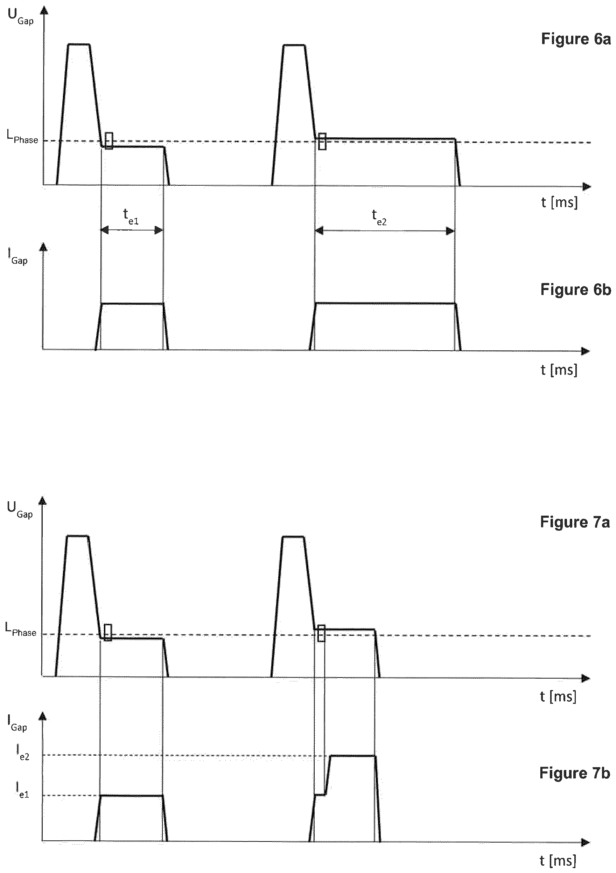

As discussed earlier several parameters of a discharge current pulse can be adjusted in consideration of the phase at which the present discharge is taking place, and to achieve certain technological results. Figures 6a and 6b show an adjustment of the discharge duration $t_e$ based on the measurement of the present discharge voltage.

Figure 7a and 7b show an adjustment of the amplitude of discharge current $I_e$.

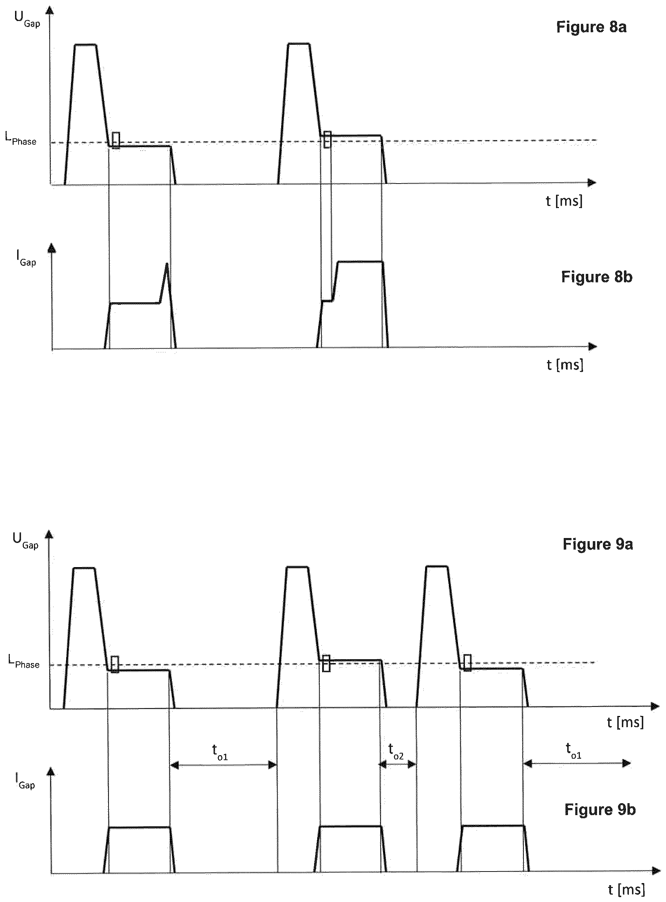

Figure 8a and 8b show an adjustment of the shape and the amplitude of discharge current $I_e$. In particular, figure 8a shows a discharge current pulse with a current peak at its end, whereas the discharge current pulse of figure 8b is nearly a square pulse which has a higher energy.

Figure 9a and 9b show an adjustment of the inter-pulse pause $t_o$ between two successive pulses.

Figure 10a and 10b show an adjustment of the slope of the discharge current $I_e$. It goes without saying that the adjustments can be combined.

Some of the adjustments of the discharge current pulse serve to adjust the pulse energy. For instance, the discharge duration and the amplitude of discharge current directly affect the energy of a discharge pulse and thus the technological results, including for example the removal rate and the surface roughness. In case of a bi-material workpiece the thermo-physical properties of the two phases of the workpiece can be very different, so that the same discharge pulse energy may lead to very different crater size on the workpiece surface. According to an embodiment of the invention the pulse energy, e.g. length and/or the amplitude of the current pulse is adjusted to generate same or similar crater size in both of the phases, generating an uniform machining surface.

Another adjustment is the inter-pulse pause time $t_o$, $t_{o1}$, $t_{o2}$ between two successive pulses which can be adapted as needed, as illustrated in figure 9a and 9b. Highly contaminated dielectric may cause insufficient deionization, concentrated discharges, and deteriorated discharges. According to an embodiment of the invention an optimal pulse pause is set for each of the phases of the workpiece.

Moreover, the pause time $t_o$ may be extended if a certain number of discharges is detected at the same phase, which may be an indicator of a tendency to form concentrated discharges. Other action can be triggered if it is found that the process is unevenly distributed across the phases, for instance a flushing jump motion cycle can be adjusted. In this way the machining time is reduced, and occurrence of arcing is prevented.

According to the embodiments presented so far, the discharge voltage $U_e$ is measured at the gap at the beginning of the discharge current pulse, as shown e.g. in the figure 5a, and the current pulse is then adjusted based on the measured discharge voltage.

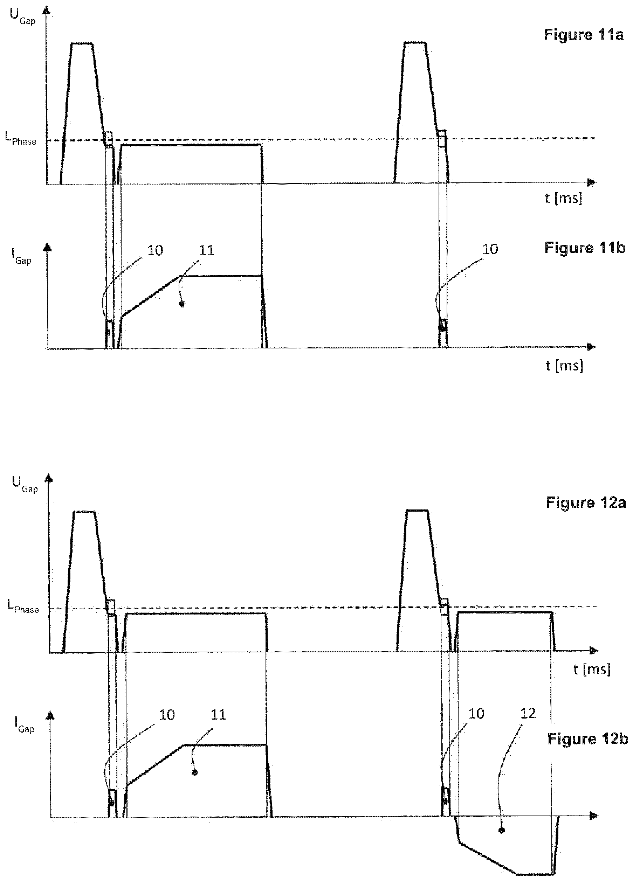

According to an alternative embodiment which is illustrated in figures 11a,b and 12a,b, a pilot pulse 10 is applied immediately after the breakdown and the discharge voltage of the pilot pulse is measured to identify the phase of the multiple material workpiece which is hit by this pilot pulse. One of a plurality of dedicated main current pulses 11, 12 is then applied immediately after the pilot pulse, so that the power pulse occurs at the same place as the pilot pulse. The dedicated main current pulse is selected based on the discharge voltage measured. In this way a main current pulse which is adapted to the present phase material can be applied.

In particular, the pilot pulse is a test pulse, thus, the amplitude of this pulse is relatively small because the goal is not to erode material, but it must be sufficient to maintain the discharge.

The figure 11b shows the short pilot pulse 10 followed by a first main current pulse 11 which is shaped to include a slope section for the reduced wear. Figure 11b shows also a case in which after the application of the pilot pulse the main current pulse was intentionally omitted (right) based on the measured discharge voltage.

The figure 12a,b shows the same principle in which the discharge voltage is measured by means of a short pilot pulse 10 of moderate amplitude. Upon measurement of the discharge voltage and detection of the phase at which the present discharge occurs, the pulse parameter setting of the main current pulse 11, 12 is adapted. In this case the electrode polarity is adapted based on the measured discharge voltage of the pilot pulse.

The required straight or reverse polarity current pulse is released by distinct power generator boards, based on the measured discharge voltage.

In the figures 11 and 12, the interruption of the pulse current between the pilot pulse and the main pulse is for explanatory purposes only, in reality there is substantially no interruption.

The inventive method enables a phase adaptive EDM machining technology which discriminates the phase by means of real time process signal analysis. It can be easily implemented with the control of a die sinking machine, provided that the discharge voltage for each phase can be determined to discriminate the phases of the multi-material workpiece for the given conditions.

For example, at the setup, the user selects the multi-material workpiece option in the user interface (HMI) and specifies the electrode material and the phases of the multi-material workpiece. The control unit has a database with a list of workpiece materials and the user can select the phases which are used with the workpiece via HMI. Additional information may be provided by the user optionally, for instance the surface area of each phase, the distribution of phases in the multiple material workpiece, the desired surface quality of each phase, etc.

The database includes the characteristic discharge voltage for each workpiece phase and electrode material combination, as a function of the discharge current and eroding surface. The control system checks whether the present combination of electrode material and workpiece phases can be reliably distinguished based on the discharge voltage.

The user may further select the desired priority for the EDM processing of the multi-material workpiece, for instance to achieve a uniform surface across two phases of a bi-material workpiece, in which case the pulses are adjusted to produce the same or similar crater size at both phases and same cumulated electrode wear. The protection levels, e.g. threshold for arc prevention are also retrieved from the database for each phase-electrode combination. The program is started and the process is conducted using a dedicated machining parameter set for each phase of the multi-material workpiece, or using a single machining parameter set for all phases at the very begin and successively switching to dedicated machining parameters.

The discharge voltage is measured and analysed during the machining process. For example, a discharge voltage measurement is conducted periodically in-process for many successive pulses, and the distribution of discharge voltages is analysed to determine the number of accumulation points which reflect the discharge voltage for each phase. This information can be used to adjust the voltage thresholds $L_{phase}$, the protection levels (arc voltage treshold), or other purposes. In this way the phases are discriminated correctly, even if the discharge voltage changes, e.g. due to the progression of the cavity depth.

The discharge voltage measurement and analyses can also be used to compute the number of discharges occurring at each of the phases, then optimizing certain process parameters settings, e.g. servo control parameters. The discharge voltage measurement and analyses can also be used for tracking purposes. For instance, a deviation of a monitored process signal can be a hint for a deviation in the material composition or the unexpected presence of an additional phase.

The invention relates also to a control system implementing the disclosed method.

The invention is not always applicable, for example if the difference in discharge voltage between the electrode material and the individual phase of the workpiece is too small. Other factors that influence the discharge voltage can also lead to uncertainty in determining the current phase, such as the geometry of the erosion surface area discussed e.g. in document EP2610027B1. In these cases, conventional methods can be adopted, e.g. by determining a compromise parameter set which is used for all phases.

Sometimes the real time adjustment of the discharge current pulse suits for both requirements, i.e. the present geometric feature requirements and the requirement given by the present phase. For instance, a comparably low discharge voltage may be due either to the discharge occurring at a corner section rather than at a front section of the electrode, or to the discharge occurring at an aluminium phase rather than a steel phase. In such case, the corrective measure, reducing the pulse energy, may fit for both situations.

Moreover, as known e.g., from the document EP2848349B1, the front gap width is usually smaller than the side gap width, and the respective front discharge voltage is smaller than the side discharge voltage. This could reduce in some cases the effectiveness of the inventive method. However, this issue could be mitigated by determining the side discharge voltage, for example by retracting periodically the electrode by a small distance. The front gap is enlarged enough to suppress front discharges; in this way the discharge voltage if side discharges $U_{e(side)}$ is determined and stored.

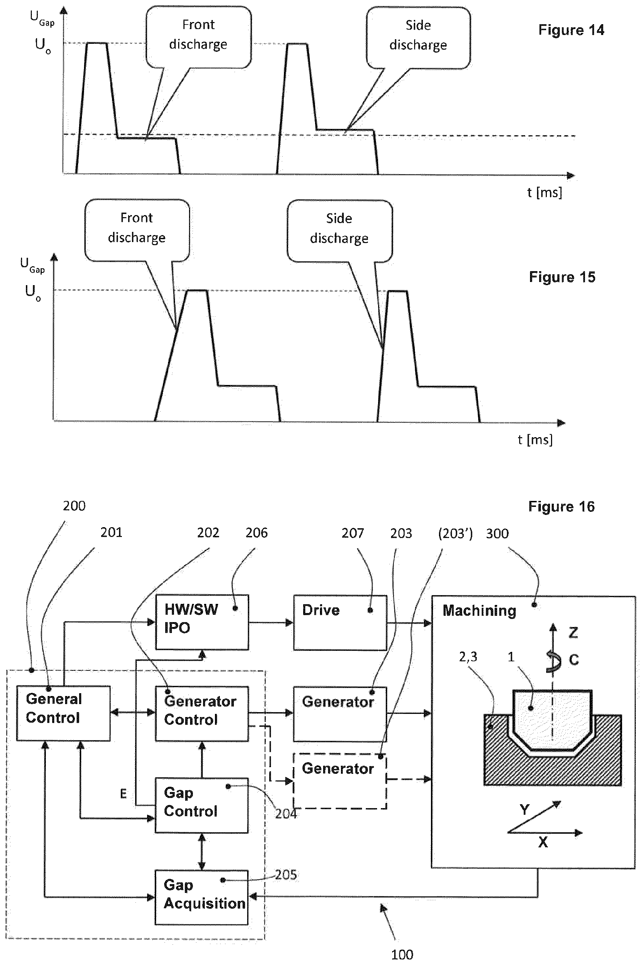

Another method shown in figure 14 includes measuring the discharge voltage at the beginning of the machining, when one has only front discharges $U_{e(front)}$ storing the discharge voltage of the front discharges. This would give an approximate range of the discharge voltage for a given workpiece material.

For electrodes that have a front surface larger than the lateral one, a convenient method to determine if one has a front or side discharge consists in applying the open voltage $U_o$ by a limited weak current source.

In this case the voltage ramp dU/dt follows the formula:

$$C = I*dt/dU$$

Where C is the gap capacitance in [F], $I_s$ is the current from the current source in [A], dt/dU is the inverse of the voltage ramp in [s/V].

$$\text{Now, to determine the electrode front surface:} \quad C = \varepsilon_o * \varepsilon_r * A/d$$
$$\rightarrow \quad A = C*d/ \varepsilon_o * \varepsilon_r$$

Where $\varepsilon_o$ is the dielectric constant in vacuum $8.85 \times 10^{-12}[C^2N^{-1}m^{-2}]$, Er is the Relative Permittivity, ca. 3 for oil dielectric, A is the electrode front surface in $[m^2]$, and d is the front gap in [m].

Therefore, as illustrated in figure 15, it can be estimated from the slope of the open voltage if a discharge is in front or on the side of the electrode. This information, combined with the periodic retracting of the electrode, as mentioned before, allows to determine if the discharge is on a given material even in the case of materials with a similar discharge threshold voltage.

The invention can be extended by combination with known methods, for further improvement. For example, the position of a discharge can be determined to associate the discrimination of the discharge position can be used to discriminate lateral discharges . The position of a discharge can be measured in known manner e.g by measuring the partial currents flowing in three or more current feeding paths.

Figure 16 shows a block diagram of an embodiment of a die-sinking machining apparatus in accordance with the present invention. The general structure of a die-sinking EDM apparatus is also known to the skilled person. The die-sinking EDM apparatus 100 has a control block 200 for performing the EDM process. The control block 200 has a general control module 201, a generator control module 202 for controlling at least one generator 203, 203', a machining gap control module 204 for controlling a machining gap between a tool electrode, and a workpiece and a gap acquisition module 205 for receiving machining gap related data during the machining process.

The electrode 1 and the workpiece are located in a machining block 300. The positioning of the electrode relative to the workpiece is performed over an interpolator module 206 and a drive module 207 which drives positioning members, such as servo-feeds, in the C, X, Y and Z-direction as indicated in the machining block 300 of Fig. 16. The interpolator 206 divides the incoming servo position (or velocity) vector error E, computed in the machining gap control module 204, into the physical axes X., Y, Z, C, etc.

in certain embodiments there is more than one generator 203, 203', where the generators can provide different pulse types, e.g. transistor pulses or capacitive pulses, but also pulses of different polarity.

The tool electrode 1 is made of graphite. In other embodiments, the tool electrode can be made of any other known material suitable for tool electrodes, e.g. copper-graphite, copper, copper-tungsten, etc.. In this embodiment the workpiece is a multiple material workpiece having plural phases 2, 3. The workpiece phases can include metal and/or other electrically conductive material, such as metals or conductive ceramics, but also high electric resistance materials.

During the machining of a multiple material workpiece a process signal, e.g. the gap voltage is measured by means of the gap acquisition module 205. After the determination of the discharge voltage of a present discharge the generator control module 202 determines in real time the adjusted pulse parameter settings to be used by the generator 203 for the present discharge.

**LIST OF REFERENCES**

| | |
|---|---|
| 1 | electrode |
| 2, 3 | phases of a multiple material workpiece |
| 10 | pilot pulse |
| 11, 12 | main current pulses |
| 100 | die-sinking EDM apparatus |
| 200 | control block |
| 201 | general control module |
| 202 | generator control module |
| 203 | generator module |
| 204 | gap control module |
| 205 | gap acquisition module |
| 206 | interpolator module |
| 207 | drive module |
| 300 | machining block |

| | |
|---|---|
| $U_{gap}$ | Gap voltage |
| $I_{gap}$ | Gap current |
| OCP | Oscillator Clock Pulse |
| $t_d$ | ignition delay time, from application of the open voltage to breakdown detection |
| $t_f$ | fall time |
| $t_e$ | discharge time |
| $t_i$ | pulse duration |
| $t_o$ | pulse pause |

| | |
|---|---|
| $U_o$ | ignition voltage |
| $U_e$ | discharge voltage |

| | |
|---|---|
| $T_m$ | measurement period |
| $T_w$ | waiting time, or timeout |
| $L_{phase}$ | phase discrimination threshold voltage |
| $L_1$ | threshold voltage, breakdown detection |
| $L_2$ | threshold voltage, fall time detection |

**Claims**

1. Method for machining a multiple material workpiece (2) by electrical discharge machining, the workpiece including at least two distinct phases, whereas the machining process is conducted by applying discrete pulses to a gap between an electrode (1) and the multiple material workpiece, whereas an ignition voltage is applied to the gap to provoke a dielectric breakdown and a discharge current pulse is then applied to cause a material removal or material remelting, **characterized in that**
   at least two distinct phases of the multiple material workpiece are machined in the same machining operation, and that the distinct phase of the multiple material workpiece at which a present discharge occurs is identified in real time based on a monitored process signal that settles with or after the dielectric breakdown, and that at least one pulse parameter setting of the present discharge current pulse is adapted based on the identified distinct phase of the multiple material workpiece.

2. Method according to claim 1, **characterized in that** the monitored process signal which is indicative of the distinct phase of the multiple material workpiece at which a present discharge occurs is one or more of the following: a

discharge voltage $U_e$, a fall time $t_f$, and a discharge plasma oscillation frequency $f_{Pe}$.

3. Method according to claim 2, **characterized in that** the discharge voltage $U_e$ of the present discharge is measured within a measurement period $T_m$, preferably after a waiting time $T_w$ after the detection of the dielectric breakdown.

4. Method according to claim 3, **characterized in that** the measured discharge voltage of the present discharge is compared with one or more voltage thresholds $L_{phase}$, and that the present discharge is assigned to one of the at least two distinct phases of the multiple material workpiece, based on the comparison of the measured discharge voltage with the one or more voltage thresholds.

5. Method according to one of the claims 1 to 4, **characterized in that** a characteristic discharge voltage for a specific combination of an electrode material and a phase of the workpiece material is determined by measurement.

6. Method according to one of the claims 1 to 4, **characterized in that** a characteristic discharge voltage for a specific combination of an electrode material and a phase of the workpiece material is estimated using a model.

7. Method according to claim 5, **characterized in that** a specific combination of an electrode material and a phase of the workpiece material is machined by EDM and that the discharge voltages of a plurality of successive discharge pulses are determined by measurement, whereas the discharge voltage is measured after a waiting period Tw after the detection of the dielectric breakdown, and that the characteristic discharge voltage is determined by computing the average value of the measured discharge voltages.

8. Method according to one of the preceding claims, **characterized in that** the discharge voltages of a plurality of successive discharge pulses that settle between an electrode material and a phase of the multiple material workpiece are measured in process, and that the distribution of discharge voltage measurements is analysed to determine accumulation points, and that an average discharge voltage is computed for each accumulation point, and that the determined average discharge voltages at accumulation points are used as a characteristic discharge voltage for each combination of an electrode material and a phase of the multiple material workpiece.

9. Method according to one of the preceding claims, **characterized in that** a threshold voltage $L_{phase}$ which is used to determine the distinct phase of the multiple material workpiece for the present discharge is set between the characteristic discharge voltage of each material combination consisting of the electrode material and one distinct phase of the multiple material workpiece, whereas that these characteristic discharge voltages are:

    a. retrieved from a technology parameter database, or
    b. determined in-process.

10. Method according to one of the preceding claims, **characterized in that** the present machining pulse is adapted in real time based on the identified distinct phase of the multiple material workpiece at which a present discharge occurs by adjusting at least one pulse parameter.

11. Method according to claim 10, **characterized in that** the at least one adapted pulse parameter includes one or more of: the discharge duration $t_e$, the discharge current amplitude $I_e$, the discharge current pulse shape, the pulse pause $t_o$ and the electrode polarity.

12. Method according to one of the previous claims, **characterized in that** a pilot pulse is applied immediately after the dielectric breakdown and that the discharge voltage is measured at said pilot pulse, and that the phase of the workpiece which is hit by present discharge is determined based on the measured discharge voltage.

13. Method according to one of the preceding claims, **characterized in that** the present machining pulse is adapted in real time based on the identified distinct phase of the multiple material workpiece at which a present discharge occurs by applying one of a plurality of predefined set of machining parameters.

14. Method according to one of the preceding claims, **characterized in that** a threshold voltage level for arc-detection is adapted in real time based on the detected distinct phase of the multiple material workpiece.

15. A die-sinking machining apparatus (100) for machining a multiple material workpiece (2,3) including at least two distinct phases comprising a generator control module (202) configured to control a generator (203, 203') for applying discrete pulses to a gap between an electrode (1) and the multiple material workpiece, whereas an ignition voltage is applied to the gap to provoke a dielectric breakdown and a discharge current pulse is then applied to cause a material removal or material remelting,

**characterized in that**

the apparatus further comprises a gap acquisition module (205) configured to monitor a process signal that settles with or after the dielectric breakdown, wherein the general controi moduie (201) is configured to identify in real time the distinct phase of the multiple material workpiece at which a present discharge occurs based on the monitored process signal, and wherein the generator control module is further configured to adapt at least one pulse parameter setting of the present discharge current pulse based on the identified distinct phase of the multiple material workpiece.

**Figure 1a**

**Figure 1b**

**Figure 1c**

**Figure 1d**

**Figure 1e**

**Figure 1f**

Figure 2a : Steel

Figure 2b : Aluminium

Figure 3a

Figure 3b

Figure 3c

Figure 4

Figure 5a

Figure 5b

Figure 5c

Figure 5d

**Figure 6a**

**Figure 6b**

**Figure 7a**

**Figure 7b**

Figure 8a

Figure 8b

Figure 9a

Figure 9b

EP 4 678 320 A1

Figure 10a

$U_{Gap}$

$L_{Phase}$

t [ms]

$I_{Gap}$

Figure 10b

t [ms]

Figure 13b

Figure 13a

22

U_Gap

**Figure 11a**

L_Phase

t [ms]

**Figure 11b**

I_Gap

10    11

10

t [ms]

U_Gap

**Figure 12a**

L_Phase

t [ms]

I_Gap

10    11

10    12

**Figure 12b**

Figure 14

Figure 15

Figure 16

Europäisches
Patentamt

European
Patent Office

Office européen
des brevets

## EUROPEAN SEARCH REPORT

Application Number

EP 24 18 8009

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 610 027 A1 (AGIE CHARMILLES SA [CH]) 3 July 2013 (2013-07-03) * figure 6 * | 15 | INV. B23H1/02 B23H9/00 |
| A | US 2008/110865 A1 (HASHIMOTO TAKASHI [JP] ET AL) 15 May 2008 (2008-05-15) * figure 18 * * pages 189, 200 * | 1-15 | |
| A,D | ABLYAZ TIMUR RIZOVICH ET AL: "Study of the EDM Process of Bimetallic Materials Using a Composite Electrode Tool", MATER, vol. 15, no. 3, 19 January 2022 (2022-01-19), page 750, XP093238575, ISSN: 1996-1944, DOI: 10.3390/ma15030750 * abstract * | 1-15 | |

TECHNICAL FIELDS
SEARCHED        (IPC)

B23H

The present search report has been drawn up for all claims

| Place of search | Date of completion of the search | Examiner |
|---|---|---|
| The Hague | 14 January 2025 | Jaeger, Hein |

EPO FORM 1503 03.82 (P04C01)

**EP 4 678 320 A1**

## ANNEX TO THE EUROPEAN SEARCH REPORT
## ON EUROPEAN PATENT APPLICATION NO.

EP 24 18 8009

14-01-2025

| Patent document cited in search report | Publication date | Patent family member(s) | Publication date |
|---|---|---|---|
| EP 2610027 A1 | 03-07-2013 | EP 2610027 A1 | 03-07-2013 |
| | | ES 2555254 T3 | 30-12-2015 |
| US 2008110865 A1 | 15-05-2008 | CN 101052489 A | 10-10-2007 |
| | | DE 112006000074 T5 | 20-11-2008 |
| | | JP 5037941 B2 | 03-10-2012 |
| | | JP WO2007032114 A1 | 19-03-2009 |
| | | US 2008110865 A1 | 15-05-2008 |
| | | WO 2007032114 A1 | 22-03-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CH 662074 A5
- EP 2610027 B1

- CN 106270839 A
- EP 2848349 B1

**Non-patent literature cited in the description**

- **SANDERS** ; **FOTHERGILL**. How to EDM steel and copper alloy simultaneously - A strategy for machining details when the part geometry falls across multiple workpiece materials. *Moldmaking Technology*, November 2019
- **ABLYAZ et al.** Study of the EDM Process of Bimetallic Materials Using a Composite Electrode Tool. *Materials*, 2022, vol. 15 (3), https://doi.org/10.3390/ma 15030750

- **BEHRENS et al.** Threshold Technology and Its Application for Gap Status Detection. *Journal of Materials Processing Technology*, vol. 149 (1), 310-315, https://doi.org/10.1016/j.jmatprotec.2003.10.041
- **VALENTINČIČ et al.** On-Line Selection of Rough Machining Parameters'.. *Journal of Materials Processing Technology*, vol. 149 (1), 256-262, https://doi.org/10.1016/j.jmatprotec.2003.11.059